# EUROPÄISCHE PATENTSCHRIFT

(11) **EP 2 952 699 B1**
(45) Veröffentlichungstag und Bekanntmachung des Hinweises auf die Patenterteilung: **09.08.2017**
(21) Anmeldenummer: 14171509.4
(22) Anmeldetag: 06.06.2014
(51) Int. Cl.: F01D 25/24

(54) **Gasturbinenbauteilanordnung**
Gas turbine component assembly
Système de composant pour turbines à gaz

(43) Veröffentlichungstag der Anmeldung: 09.12.2015
(73) Patentinhaber: MTU Aero Engines AG, 80995 München (DE)
(72) Erfinder: Eichinger, Alois, 85276 Pfaffenhofen (DE); Sasse, Stefan, 85238 Petershausen (DE); Fritz, Mark, 85221 Dachau (DE)

(56) Entgegenhaltungen:
- EP-A1- 1 277 919
- EP-A1- 1 939 459
- EP-A2- 2 538 035
- US-A- 5 259 725
- US-A- 5 451 116

## Beschreibung

Die vorliegende Erfindung betrifft eine Gasturbinenbauteilanordnung nach dem Oberbegriff des Anspruchs 1, wie in der Druckschrift US 5,451,116 beschrieben ist.

In Gasturbinen muss eine Vielzahl von Bauteilen miteinander verbunden werden. So werden beispielsweise nach betriebsinterner Praxis bisher sogenannte Fairings und Panels von Turbinenmittelrahmen ("Turbine Center Frame" TCF) dadurch miteinander verbunden, dass Gewindebolzen in die Fairings eingelötet werden, auf denen Klemmplatten verspannt werden. Die vorliegende Erfindung kann insbesondere für solche Fairings und Panels verwendet werden und wird daher nachfolgend exemplarisch daran erläutert, sie kann jedoch gleichermaßen zur Verbindung anderer Bauteile einer Gasturbine verwendet werden.

Eine Aufgabe einer Ausführung der vorliegenden Erfindung ist es daher, eine Gasturbine mit wenigstens zwei miteinander verbundenen Bauteilen zur Verfügung zu stellen.

Diese Aufgabe wird durch eine Gasturbinenbauteilanordnung mit den Merkmalen des Anspruchs 1 gelöst. Anspruch 12 stellt ein Verfahren zum Verbinden eines ersten und zweiten Bauteils einer solchen Gasturbinenbauteilanordnung bzw. eine Gasturbine, insbesondere ein Flugtriebwerk, mit einer solchen Gasturbinenbauteilanordnung unter Schutz. Vorteilhafte Ausführungsformen der Erfindung sind Gegenstand der Unteransprüche.

Nach einem Aspekt der vorliegenden Erfindung weist eine Gasturbinenbauteilanordnung ein erstes Bauteil und ein damit verbundenes zweites Bauteil auf.

Das erste Bauteil kann insbesondere ein erstes Wandsegment, insbesondere ein sogenanntes Fairing oder Panel, eines Gasturbinenkanalgehäuses, insbesondere eines Turbinenmittelrahmens zwischen einer ersten und einer zweiten Turbine, sein, das zweite Bauteil entsprechend insbesondere ein zweites Wandsegment, insbesondere ein Panel oder Fairing, des Gasturbinenkanalgehäuses.

Das zweite Bauteil weist einen Flansch auf, der eine Oberfläche des ersten Bauteils teilweise überlappt, die nachfolgend ohne Beschränkung der Allgemeinheit als eine Oberseite des ersten Bauteils bezeichnet wird. Eine dieser Oberseite gegenüberliegende Oberfläche des ersten Bauteils wird entsprechend nachfolgend ebenfalls ohne Beschränkung der Allgemeinheit als eine Unterseite des ersten Bauteils bezeichnet. Die Oberseite kann insbesondere eine radial äußere Oberfläche des ersten Bauteils sein, die Unterseite entsprechend insbesondere eine radial innere Oberfläche. Zusätzlich oder alternativ kann die Oberseite eine einem durch die Bauteile definierten Gaskanal abgewandte Oberfläche sein, die Unterseite entsprechend eine dem durch die Bauteile definierten Gaskanal zugewandte, insbesondere den Gaskanal definierende Oberfläche.

Der Flansch des zweiten Bauteils ist in einer Ausführung abgekantet, um das erste Bauteil teilweise zu überlappen. Zusätzlich oder alternativ kann auch ein von dem Flansch überlappter Rand des ersten Bauteils abgekantet sein.

Die Gasturbinenbauteilanordnung weist eine Wippe mit einem Gelenkabschnitt und wenigstens einem Arm auf, der nachfolgend zur Unterscheidung auch als erster Arm bezeichnet wird. In einer Ausführung weist die Wippe auf einer dem ersten Arm gegenüberliegenden Seite des Gelenkabschnitts einen weiteren Arm auf, der entsprechend als zweiter Arm bezeichnet wird. In einer Ausführung sind der Gelenkabschnitt und der bzw. die Arme integral miteinander ausgebildet.

Der Gelenkabschnitt ist, insbesondere um eine Drehachse, drehbar in einer Nut an dem ersten Bauteil gelagert. Hierzu weist der Gelenkabschnitt in einer Ausführung eine abgerundete, insbesondere wenigstens teilweise zylinderförmige, Kontur bzw. Mantelfläche auf. In einer Weiterbildung weist ein Querschnitt des Gelenkabschnitts eine kreissegmentförmige Außenkontur von wenigstens 30° auf.

Die Nut weist in einem Querschnitt senkrecht zu einer Richtung, die nachfolgend als Nutlängsrichtung bezeichnet wird, zwei Nutflanken auf, die einander in einer Richtung gegenüberliegen, die nachfolgend als Nutbreitenrichtung bezeichnet wird und in einer Ausführung senkrecht zu der Nutlängsrichtung ist. Die Nutflanken sind durch einen Nutgrund verbunden, der einem offenen Nutrand gegenüberliegt, wobei die Richtung von Nutgrund zum Nutrand hin nachfolgend als Nuttiefenrichtung bezeichnet wird, die in einer Ausführung senkrecht zu der Nutlängs- und/oder -breitenrichtung ist.

Die Nut erstreckt sich in einer Ausführung, wenigstens im Wesentlichen, in Axialrichtung der Gasturbine bzw. parallel zu deren Mittel- bzw. Rotorachse. Entsprechend kann die Nutlängsrichtung parallel zur Axialrichtung der Gasturbine sein. In einer anderen Ausführung erstreckt sich die Nut, wenigstens im Wesentlichen, in Umfangsrichtung der Gasturbine bzw. senkrecht zu deren Mittel- bzw. Rotorachse. Entsprechend kann die Nutlängsrichtung parallel zur Umfangsrichtung der Gasturbine sein.

In einer Ausführung beträgt eine, insbesondere maximale, Erstreckung der Nut in Nutlängsrichtung wenigstens das Doppelte, insbesondere wenigstens das Vierfache, einer, insbesondere maximalen, Erstreckung der Nut in Nutbreitenrichtung.

Die Nut weist in einer Ausführung einen, wenigstens im Wesentlichen, rechteckigen, Querschnitt auf. Dieser ist vorteilhaft einfach zu fertigen. In einer anderen Ausführung konvergiert ein Nutquerschnitt in Nuttiefenrichtung zu dem Nutrand hin bzw. weisen die Nutflanken zu dem Nutrand hin einen Hinterschnitt, insbesondere einen Radius auf. Hierdurch kann in einer Ausführung ein Herausziehen des Gelenkschnitts in Nuttiefenrichtung aus der Nut formschlüssig verhindert werden. Allgemein weist in einer Ausführung der in der Nut gelagerte Gelenkabschnitt in Nutbreitenrichtung eine maximale Abmessung auf, die größer ist als der Abstand der beiden Nutflanken am Nutrand, um so ein Herausziehen des Gelenkschnitts in Nuttiefenrichtung aus der Nut formschlüssig zu verhindern. In einer Ausführung weist die Nut einen, wenigstens im Wesentlichen, kreisförmigen Querschnitt auf, insbesondere können ein oder beide Nutflanken und/oder der Nutgrund einen, vorzugsweise denselben, Radius aufweisen. Hierdurch kann die Drehlagerung des Gelenkabschnitts verbessert werden, dessen Kontur bzw. Mantelfläche vorzugsweise den Nutflanken entsprechende Radien aufweist.

In einer Ausführung ist eine Drehachse, um die der Gelenkabschnitt in der Nut drehbar (gelagert) ist, parallel zu, insbesondere fluchtend mit, der Nutlängsrichtung.

Die Gasturbinenbauteilanordnung weist eine Stellschraube mit einem Außen- oder Innengewinde und einer Schraub- bzw. Längsachse auf.

Nach einem Aspekt der vorliegenden Erfindung wird bzw. ist der Flansch des zweiten Bauteils zwischen dem ersten Bauteil und dem (ersten) Arm der Wippe geklemmt, welcher durch die Stellschraube gegen den Flansch gespannt bzw. -presst wird bzw. ist. Hierdurch können das erste und zweite Bauteil in vorteilhafter Weise reibschlüssig, insbesondere lösbar, miteinander verbunden werden. Durch Einstellen bzw. Verändern der Spannung der Stellschraube kann der Reibschluss vorteilhaft eingestellt bzw. verändert werden.

Erfindungsgemäß stützt sich die Stellschraube auf einer wippenseitigen bzw. der Wippe zugewandten Oberfläche. bzw. der Oberseite des ersten Bauteils, die von dem Flansch des zweiten Bauteils teilweise überlappt wird, an dem ersten Bauteil ab bzw. liegt auf dieser auf. Hierdurch kann in einer Ausführung vorteilhaft die Stellschraube von der Oberseite her verschraubt und so die Verbindung (de)montiert bzw. eingestellt werden. Insbesondere, wenn die der Oberseite gegenüberliegende Unterseite einen Gaskanal definiert, kann so eine Störung des Gaskanals durch die Stellschraube vermieden und/oder die (De)Montage vereinfacht werden. Entsprechend stützt sich die Stellschraube in einer Ausführung auf einer wenigstens im Bereich der Abstützung geschlossenen Oberfläche des ersten Bauteils, insbesondere dessen Oberseite, ab bzw. liegt auf dieser geschlossenen Oberfläche bzw. -seite auf.

In einer Ausführung ist bzw. wird die Stellschraube auf einer dem (ersten) Arm gegenüberliegenden Seite einer Drehachse des in der Nut drehbar gelagerten Gelenkabschnitts angeordnet und/oder spannt das erste Bauteil und die Wippe, insbesondere einen zweiten Arm der Wippe, der auf einer dem ersten Arm gegenüberliegenden Seite der Drehachse des Gelenkabschnitts angeordnet ist, auseinander. Hierdurch kann in einer Ausführung eine vorteilhafte Hebelwirkung genutzt werden. Zusätzlich oder alternativ wird so die Stellschraube vorteilhaft auf Druck beansprucht.

In einer Ausführung ist der drehbar in der Nut gelagerte Gelenkabschnitt in wenigstens einer Richtung von der Oberseite des ersten Bauteils weg, insbesondere in einer Richtung parallel zur Schraubachse der Stellschraube und/oder parallel zur einer Klemmrichtung der Klemmung zwischen Flansch und (erstem) Arm der Wippe von der Oberseite des ersten Bauteils weg, formschlüssig gesichert, insbesondere festgelegt. Insbesondere hierzu weist die Nut in einer Ausführung in dieser Richtung eine Hinterschneidung bzw. einen Anschlag auf, an dem sich der Gelenkabschnitt gegen eine Bewegung von der Oberseite des ersten Bauteils weg abstützt. Auf diese Weise fungiert der drehbar in der Nut gelagerte Gelenkabschnitt als Dreh- bzw. Widerlager. Wenn die Wippe sich radial außen auf dem ersten Bauteil abstützt, stützt sich entsprechend in einer Ausführung der Gelenkabschnitt in der Nut formschlüssig gegen eine Bewegung nach radial außen ab.

In einer Ausführung ist bzw. wird die Stellschraube in Nutlängsrichtung in einer Vertiefung in dem ersten Bauteil, insbesondere dessen Oberseite, formschlüssig gesichert. Hierzu greift die verspannte Stellschraube in die Vertiefung ein, die in einer Weiterbildung sacklochartig ausgebildet ist.

In einer Ausführung ist bzw. wird die Stellschraube mit einem Gewinde in der Wippe, insbesondere deren zweitem Arm, verschraubt, um deren (ersten) Arm gegen den Flansch zu spannen bzw. pressen. Hierdurch kann in einer Weiterbildung vorteilhaft auf eine zusätzliche Mutter verzichtet werden. In einer anderen Ausführung ist bzw. wird die Stellschraube mit einer Mutter verschraubt, die sich ihrerseits an der Wippe, insbesondere deren zweitem Arm, abstützt, um deren (ersten) Arm gegen den Flansch zu spannen bzw. pressen. Hierdurch kann in einer Weiterbildung vorteilhaft auf ein Gewinde in der Wippe verzichtet werden.

In einer Ausführung ist bzw. wird die Wippe in Nutlängsrichtung ein- oder beid-seitig an dem ersten Bauteil, insbesondere formschlüssig, gesichert. Unter einem Sichern wird vorliegend insbesondere eine formschlüssige Begrenzung einer Bewegung der Wippe in Nutlängsrichtung verstanden.

Eine solche Begrenzung kann insbesondere durch eine geschlossene Stirnseite der Nut in Nutlängsrichtung realisiert sein. Entsprechend ist in einer Ausführung die Nut in Nutlängsrichtung einseitig offen und auf der gegenüberliegenden Seite geschlossen, insbesondere, um so den Gelenkabschnitt durch die offene Stirnseite in die bzw. aus der Nut ein- und auszuführen und andererseits eine Bewegung in Nutlängsrichtung durch die geschlossene Stirnseite zu begrenzen bzw. limitieren. In einer anderen Ausführung ist die Nut in Nutlängsrichtung beidseitig offen, insbesondere, um so den Gelenkabschnitt wahlweise durch die eine oder andere offene Stirnseite in die bzw. aus der Nut ein- und auszuführen. In einer weiteren anderen Ausführung ist die Nut in Nutlängsrichtung beidseitig geschlossen, insbesondere, um so eine Bewegung des Gelenkabschnitts in Nutlängsrichtung durch die geschlossenen Stirnseiten beidseitig zu begrenzen bzw. limitieren.

Insbesondere zusätzlich oder alternativ zu einer ein- oder beidseitig geschlossenen Nut kann die Wippe in Nutlängsrichtung ein- oder beidseitig formschlüssig dadurch an dem ersten Bauteil gesichert werden bzw. sein, dass die Wippe einen Anschlag oder zwei einander gegenüberliegende Anschläge in Nutlängsrichtung aufweist, der bzw. die die Nut formschlüssig hintergreifen.

In einer Ausführung beträgt ein Winkel zwischen der Nuttiefenrichtung und einer Klemmrichtung der Klemmung des Flansches zwischen dem ersten Bauteil und dem ersten Arm der Wippe und/oder der radialen Richtung der Gasturbine höchstens 15°, insbesondere höchstens 5°, insbesondere können die Nuttiefenrichtung und die Klemmrichtung, wenigstens im Wesentlichen, parallel sein bzw. kann die Nuttiefenrichtung, wenigstens im Wesentlichen, die radiale Richtung der Gasturbine sein. Hierdurch kann in einer Ausführung ein vorteilhafter Kraftfluss realisiert werden bzw. sein. In einer anderen Ausführung beträgt der Winkel zwischen der Nuttiefenrichtung und der Klemmrichtung und/oder der radialen Richtung der Gasturbine wenigstens 45°, insbesondere wenigstens 75°, insbesondere können die Nuttiefenrichtung und die Klemmrichtung, wenigstens im Wesentlichen, senkrecht zueinander sein bzw. kann die Nuttiefenrichtung, wenigstens im Wesentlichen, die axiale Richtung der Gasturbine oder parallel zur Umfangsrichtung der Gastrubine sein. Mit anderen Worten kann die Nut seitlich angeordnet sein. Hierdurch kann in einer Ausführung der Gelenkabschnitt vorteilhaft abgestützt bzw. gelagert werden bzw. sein.

Unter einer Klemmrichtung wird vorliegend insbesondere die Richtung der Klemmkraft zwischen Flansch und erstem Bauteil und/oder (erstem) Arm der Wippe und/oder eine Gerade durch die Kontaktlinie von Flansch und erstem Bauteil und die Kontaktlinie von Flansch und (erstem) Arm der Wippe verstanden.

In einer Ausführung beträgt ein Winkel zwischen der Nuttiefenrichtung und der Schraubachse der Stellschraube höchstens 15°, insbesondere höchstens 5°, insbesondere können die Nuttiefenrichtung und die Schraubachse, wenigstens im Wesentlichen, parallel sein. Hierdurch kann in einer Ausführung ein vorteilhafter Kraftfluss realisiert werden bzw. sein. In einer anderen Ausführung beträgt der Winkel zwischen der Nuttiefenrichtung und der Schraubachse der Stellschraube wenigstens 30°, insbesondere wenigstens 45°. Hierdurch kann in einer Ausführung eine (De)Montage verbessert und/oder ein Bauraum reduziert werden bzw. sein.

In einer Ausführung wird bzw. ist die Nut in einem hervorstehenden Flansch des ersten Bauteils angeordnet, insbesondere seitlich.

Nach einem Aspekt der vorliegenden Erfindung wird zum Verbinden des ersten und zweiten Bauteils der Gelenkabschnitt der Wippe in der Nut an dem ersten Bauteil gelagert und anschließend die Stellschraube verschraubt, um dadurch den (ersten) Arm der Wippe gegen den Flansch zu spannen.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: eine Gasturbinenbauteilanordnung nach einer Ausführung der vorliegenden Erfindung in einem Schnitt senkrecht zu einer Nutlängsrichtung und Drehachse der Gasturbine;
- Fig. 2: einen Schnitt längs der Linie II-II in Fig. 1;
- Fig. 3: eine Gasturbinenbauteilanordnung nach einer Ausführung der vorliegenden Erfindung in Fig. 1 entsprechender Darstellung längs der Linie III-III in Fig. 4; und
- Fig. 4: eine Draufsicht von radial außen auf die Gasturbinenbauteilanordnung der Fig. 3 ohne Stellschraube.

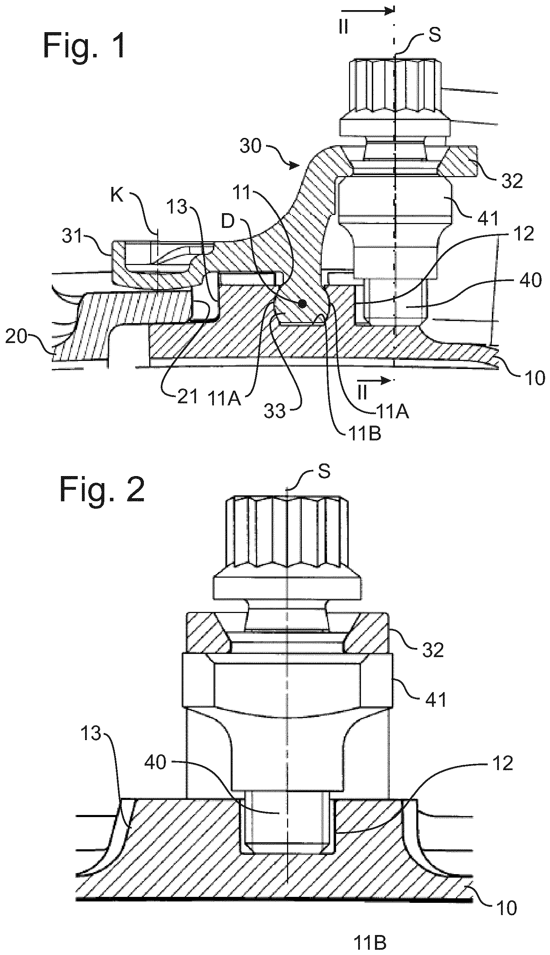

Fig. 1 zeigt eine Gasturbinenbauteilanordnung nach einer Ausführung der vorliegenden Erfindung in einem Schnitt senkrecht zu einer Nutlängsrichtung und Drehachse der Gasturbine mit einem ersten Bauteil in Form eines Fairings 10 eines TFCs und einem damit verbundenen zweiten Bauteil in Form eines Panels 20 mit einem abgekanteten Flansch 21 der das erste Bauteil auf dessen Oberseite (oben in Fig. 1, 2) überlappt. Gleichermaßen kann auch das erste Bauteil 10 ein Panel und das zweite Bauteil 20 ein Fairing sein. Die Oberseite ist entsprechend eine radial äußere und einem durch die Bauteile 10, 20 definierten Gaskanal abgewandte Oberfläche des ersten Fairings bzw. Panels.

Die Gasturbinenbauteilanordnung weist eine Wippe 30 mit einem Gelenkabschnitt 33, einem ersten Arm 31 sowie auf einer dem ersten Arm 31 gegenüberliegenden Seite des Gelenkabschnitts 33 (rechts in Fig. 1) einen zweiten Arm 32 auf.

Der Gelenkabschnitt 33 ist drehbar in einer Nut 11 an dem ersten Bauteil gelagert. Er weist eine teilweise zylinderförmige Kontur bzw. Mantelfläche auf.

Die Nut 11 weist in dem Querschnitt der Fig. 1 senkrecht zur Nutlängsrichtung zwei Nutflanken 11A auf, die einander in Nutbreitenrichtung (horizontal in Fig. 1) gegenüberliegen und durch einen Nutgrund 11B verbunden sind, der einem offenen Nutrand (oben in Fig, 1) in Nuttiefenrichtung (vertikal in Fig. 1) gegenüberliegt.

Die Nut 11 erstreckt sich in Axialrichtung der Gasturbine bzw. parallel zu deren Mittel- bzw. Rotorachse. Im Querschnitt der Fig. 1 weisen beide Nutflanken 11A einen Radius auf. Dadurch konvergiert der Nutquerschnitt in Nuttiefenrichtung zu dem Nutrand hin bzw. weisen die Nutflanken zu dem Nutrand hin einen Hinterschnitt auf. Die Mantelfläche des in der Nut 11 gelagerten Gelenkabschnitts 33 weist den Nutflanken entsprechende Radien und somit in Nutbreitenrichtung eine maximale Abmessung auf, die größer ist als der Abstand der beiden Nutflanken am Nutrand, um so ein Herausziehen des Gelenkschnitts in Nuttiefenrichtung (nach oben in Fig. 1) aus der Nut formschlüssig zu verhindern. Eine Drehachse D, um die der Gelenkabschnitt 33 in der Nut 11 drehbar (gelagert) ist, fluchtet mit der Nutlängsrichtung.

Die Gasturbinenbauteilanordnung weist eine Stellschraube 40 mit einem Außengewinde und einer Schraub- bzw. Längsachse S auf.

Der Flansch 21 des zweiten Bauteils 20 wird bzw. ist zwischen dem ersten Bauteil 10 und dem ersten Arm 31 der Wippe 30 geklemmt, welcher durch die Stellschraube 40 gegen den Flansch gespannt bzw. -presst wird bzw. ist.

Die Stellschraube 40 stützt sich auf einer wippenseitigen bzw. der Wippe 30 zugewandten, geschlossenen Oberfläche bzw. -seite des ersten Bauteils 10 (oben in Fig. 1), die der Flansch des zweiten Bauteils teilweise überlappt, an dem ersten Bauteil ab.

Die Stellschraube ist auf einer dem ersten Arm 31 gegenüberliegenden Seite (rechts in Fig. 1) von der Drehachse D des in der Nut 11 drehbar gelagerten Gelenkabschnitts 33 angeordnet und spannt das erste Bauteil 10 und den zweiten Arm 32 der Wippe auseinander.

Die verspannte Stellschraube ist, wie insbesondere in Fig. 2 erkennbar, in Nutlängsrichtung (horizontal in Fig. 2) in einer sacklochartigen Vertiefung 12 in der Oberseite des ersten Bauteils 10 formschlüssig gesichert und greift hierzu in diese Vertiefung ein.

Die Stellschraube 40 ist bzw. wird mit einer Mutter 41 verschraubt, die sich ihrerseits an dem zweitem Arm 32 der Wippe abstützt, um deren ersten Arm 31 gegen den Flansch zu spannen bzw. pressen. Die Mutter 41 stützt sich zudem derart an der Wippe 30 ab, dass sie verdrehsicher gelagert ist, d.h. relativ zu der Wippe keine Drehbewegung ausführen kann, wenn die Stellschraube 40 gedreht wird.

Die Nut 11 ist in Nutlängsrichtung beidseitig offen und in einem radial hervorstehenden Flansch 13 des ersten Bauteils angeordnet.

Die Nuttiefenrichtung und eine Klemmrichtung K der Klemmung des Flansches zwischen dem ersten Bauteil und dem ersten Arm der Wippe sind im Wesentlichen parallel, die Nuttiefenrichtung ist im Wesentlichen die radiale Richtung der Gasturbine (vertikal in Fig. 1). Entsprechend beträgt der Winkel zwischen Nuttiefen- und Klemmrichtung etwa 0°.

Gleichermaßen beträgt ein Winkel zwischen der Nuttiefenrichtung und der Schraubachse S der Stellschraube etwa 0°, d.h. die Nuttiefenrichtung und die Schraubachse sind im Wesentlichen parallel.

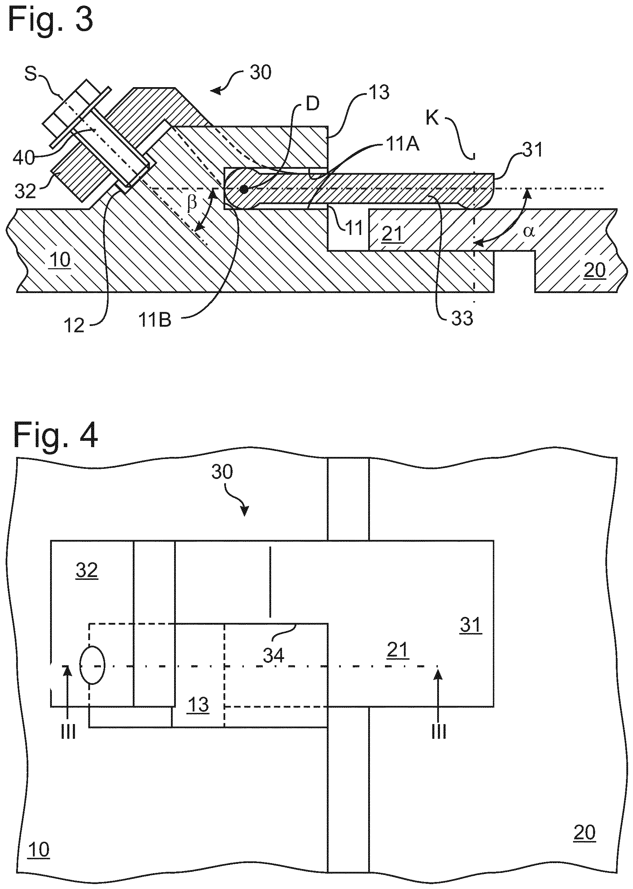

Fig. 3, 4 zeigen eine Gasturbinenbauteilanordnung nach einer Ausführung der vorliegenden Erfindung in einer Draufsicht (Fig. 4) bzw. einem Schnitt längs der Linie III-III, wobei in der Draufsicht der Fig. 4 die Stellschraube 40 nicht dargestellt ist. Einander entsprechende Merkmale sind durch identische Bezugszeichen identifiziert, so dass auf die vorstehende Beschreibung Bezug genommen und nachfolgend nur auf Unterschiede eingegangen wird.

In der Ausführung der Fig. 3, 4 ist bzw. wird die Stellschraube 40 mit einem Gewinde in dem zweiten Arm 32 der Wippe 30 verschraubt, um deren ersten Arm 31 gegen den Flansch des zweiten Bauteils 20 zu spannen bzw. pressen.

Die Wippe 30 ist in Nutlängsrichtung einseitig formschlüssig an dem ersten Bauteil 10 gesichert. Hierzu hintergreift ein Anschlag 34 der Wippe 30 in Nutlängsrichtung die Nut 11 formschlüssig, wie in der Draufsicht der Fig. 4 erkennbar.

In der Ausführung der Fig. 3, 4 beträgt der Winkel α zwischen der Nuttiefenrichtung (horizontal in Fig. 3) und der Klemmrichtung K bzw. der radialen Richtung der Gasturbine (vertikal in Fig. 3) etwa 90°, Nuttiefenrichtung und Klemmrichtung sind somit im Wesentlichen senkrecht zueinander. Mit anderen Worten ist die Nut 11 seitlich in dem radial hervorstehenden Flansch 13 des ersten Bauteils 10 angeordnet.

Der Winkel β zwischen der Nuttiefenrichtung (vertikal in Fig. 3) und der Schraubachse S der Stellschraube 40 beträgt etwa 45°.

In der Ausführung der Fig. 1, 2 ist der drehbar in der Nut 11 gelagerte Gelenkabschnitt 33 in einer Richtung parallel zur Schraubachse S der Stellschraube 40 und zur Klemmrichtung K von der Oberseite des ersten Bauteils 10 weg (vertikal nach oben in Fig. 1) durch die zum Nutrand hin konvergierenden Nutflanken 11A formschlüssig festgelegt. In der Ausführung der Fig. 3, 4 ist der drehbar in der Nut 11 gelagerte Gelenkabschnitt 33 ebenfalls in einer Richtung parallel zur Schraubachse S der Stellschraube 40 und in einer Richtung parallel zur Klemmrichtung K jeweils von der Oberseite des ersten Bauteils 10 weg (nach links oben bzw. vertikal nach oben in Fig. 3) durch die in Fig. 3 obere Nutflanke 11A formschlüssig festgelegt. Entsprechend weist in beiden Ausführungen die Nut 11 jeweils in wenigstens einer Richtung von der Oberseite des ersten Bauteils weg eine Hinterschneidung bzw. einen Anschlag auf, an dem sich der Gelenkabschnitt 33 abstützt.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen.

Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenlist

- 10: erstes Bauteil
- 11: Nut
- 11A: Nutflanke
- 11B: Nutgrund
- 12: Vertiefung
- 13: Flansch
- 20: zweites Bauteil
- 21: Flansch
- 30: Wippe
- 31: erster Arm
- 32: zweiter Arm
- 33: Gelenkabschnitt
- 34: Anschlag
- 40: Stellschraube
- 41: Mutter

- D: Drehachse
- K: Klemmrichtung
- S: Schraubachse
- α: Winkel zwischen Nuttiefenrichtung und Klemmrichtung/radialer Richtung
- β: Winkel zwischen Nuttiefenrichtung und Schraubachse

## Patentansprüche

1. Gasturbinenbauteilanordnung mit:
einem ersten Bauteil, insbesondere einem ersten Wandsegment (10) eines Gasturbinenkanalgehäuses;
einem damit verbundenen zweiten Bauteil, insbesondere einem zweiten Wandsegment (20) eines Gasturbinenkanalgehäuses, mit einem, insbesondere abgekanteten, Flansch (21), der das erste Bauteil teilweise überlappt;
einer Wippe (30) mit einem Gelenkabschnitt (33), der drehbar in einer Nut (11) an dem ersten Bauteil gelagert ist, welche in einem Querschnitt senkrecht zu einer Nutlängsrichtung zwei Nutflanken (11A), die einander in einer Nutbreitenrichtung gegenüberliegen, einen diese Nutflanken verbindenden Nutgrund (11B) und einen Nutrand aufweist, der dem Nutgrund in einer Nuttiefenrichtung gegenüberliegt; und
einer Stellschraube (40);
wobei der Flansch (21) des zweiten Bauteils zwischen dem ersten Bauteil (10) und einem Arm (31) der Wippe (30) geklemmt ist, welcher durch die Stellschraube (40) gegen den Flansch (21) gespannt ist, **dadurch gekennzeichnet, dass** die Stellschraube (40) sich auf einer wippenseitigen, insbesondere einem durch die Bauteile definierten Gaskanal abgewandten, Oberfläche des ersten Bauteils an dem ersten Bauteil (10) abstützt.

2. Gasturbinenbauteilanordnung nach einem der vorhergehenden Ansprüche, **dadurch gekennzeichnet, dass** die Stellschraube (40) auf einer dem Arm (31) gegenüberliegenden Seite einer Drehachse (D) des in der Nut drehbar gelagerten Gelenkabschnitts (33) angeordnet ist und/oder das erste Bauteil (10) und die Wippe (30) auseinander spannt.

3. Gasturbinenbauteilanordnung nach einem der vorhergehenden Ansprüche, **dadurch gekennzeichnet, dass** die Stellschraube in einer Vertiefung (12) in dem ersten Bauteil in Nutlängsrichtung formschlüssig gesichert ist.

4. Gasturbinenbauteilanordnung nach einem der vorhergehenden Ansprüche, **dadurch gekennzeichnet, dass** die Stellschraube mit einem Gewinde in der Wippe (30) oder mit einer Mutter (41) verschraubt ist, die sich an der Wippe (40) abstützt.

5. Gasturbinenbauteilanordnung nach einem der vorhergehenden Ansprüche, **dadurch gekennzeichnet, dass** die Wippe (40) in Nutlängsrichtung ein- oder beidseitig formschlüssig an dem ersten Bauteil (10) gesichert ist.

6. Gasturbinenbauteilanordnung nach dem vorhergehenden Anspruch, **dadurch gekennzeichnet, dass** die Wippe (30) wenigstens einen Anschlag (34) in Nutlängsrichtung aufweist, der die Nut (11) formschlüssig hintergreift.

7. Gasturbinenbauteilanordnung nach einem der beiden vorhergehenden Ansprüche, **dadurch gekennzeichnet, dass** die Nut (11) in Nutlängsrichtung ein- oder beidseitig offen ist.

8. Gasturbinenbauteilanordnung nach einem der vorhergehenden Ansprüche, **dadurch gekennzeichnet, dass** ein Nutquerschnitt in Nuttiefenrichtung zu dem Nutrand hin konvergiert.

9. Gasturbinenbauteilanordnung nach einem der vorhergehenden Ansprüche, **dadurch gekennzeichnet, dass** ein Winkel (α) zwischen der Nuttiefenrichtung und einer Klemmrichtung (K) der Klemmung des Flansches zwischen dem ersten Bauteil und dem ersten Arm der Wippe höchstens 15° oder wenigstens 45°, insbesondere wenigstens 75°, beträgt.

10. Gasturbinenbauteilanordnung nach einem der vorhergehenden Ansprüche, **dadurch gekennzeichnet, dass** ein Winkel (β) zwischen der Nuttiefenrichtung und einer Schraubachse (S) der Stellschraube höchstens 15° oder wenigstens 30°, insbesondere wenigstens 45°, beträgt.

11. Gasturbinenbauteilanordnung nach einem der vorhergehenden Ansprüche, **dadurch gekennzeichnet, dass** die Nut (11) in einem hervorstehenden Flansch (13) des ersten Bauteils angeordnet ist.

12. Verfahren zum Verbinden des ersten und zweiten Bauteils (10, 20) einer Gasturbinenbauteilanordnung nach einem der vorhergehenden Ansprüche, **dadurch gekennzeichnet, dass** der Gelenkabschnitt (33) der Wippe (30) in der Nut (11) an dem ersten Bauteil gelagert und die Stellschraube (40) verschraubt wird, um den Arm (31) der Wippe gegen den Flansch (21) zu spannen.

13. Gasturbine, insbesondere Flugtriebwerk, mit einer Gasturbinenbauteilanordnung nach einem der Ansprüche 1 bis 11.

14. Gasturbine nach dem vorhergehenden Anspruch, **dadurch gekennzeichnet, dass** das erste Bauteil ein erstes Wandsegment (10), insbesondere ein Fairing oder Panel, eines Gasturbinenkanalgehäuses, insbesondere eines Turbinenmittelrahmens zwischen einer ersten und einer zweiten Turbine, und das zweite Bauteil ein zweites Wandsegment (20), insbesondere ein Panel oder Fairing, des Gasturbinenkanalgehäuses ist.

## Claims

1. Gas turbine component assembly, comprising
a first component, particularly a first wall segment (10) of a gas turbine channel housing;
a second component connected thereto, particularly a second wall segment (20) of a gas turbine channel housing, with a-particularly chamfered-flange (21) that partially overlaps with the first component;
a rocker (30) with an articulating portion (33) that is rotatably supported in a groove (11) on the first component, which groove (11) has two groove flanks (11A) in a cross section perpendicular to a groove longitudinal direction that oppose one another in a groove latitudinal direction, a groove base (11B) interconnecting these groove flanks, and a groove edge opposite the groove base in a groove depth direction; and
a set screw (40);
wherein the flange (21) of the second component is clamped between the first component (10) and an arm (31) of the rocker (30), which arm (31) is braced by the set screw (40) against the flange (21), **characterized in that** the set screw (40) is supported on a rocker-side surface-particularly a surface facing away from a gas channel defined by the components-of the first component on the first component (10).

2. The gas turbine component assembly as set forth in any one of the preceding claims, **characterized in that** the set screw (40) is arranged on a side, opposite the arm (31), of an axis of rotation (D) of the articulating portion (33) rotatably mounted in the groove and/or forces the first component (10) and the rocker (30) apart.

3. The gas turbine component assembly as set forth in any one of the preceding claims, **characterized in that** the set screw is secured in a form-fitting manner in a recess (12) in the first component in the groove longitudinal direction.

4. The gas turbine component assembly as set forth in any one of the preceding claims, **characterized in that** the set screw is screwed with a thread in the rocker (30) or with a nut (41) that is supported on the rocker (40).

5. The gas turbine component assembly as set forth in any one of the preceding claims, **characterized in that** the rocker (40) is secured in a form-fitting manner on one or both sides on the first component (10) in the groove longitudinal direction.

6. The gas turbine component assembly as set forth in the preceding claim, **characterized in that** the rocker (30) has at least one stop (34) in the groove longitudinal direction that engages in a form-fitting manner behind the groove (11).

7. The gas turbine component assembly as set forth in any one of the two preceding claims, **characterized in that** the groove (11) is open on one or both sides in the groove longitudinal direction.

8. The gas turbine component assembly as set forth in any one of the preceding claims, **characterized in that** a groove cross section in the groove depth direction converges toward the groove edge.

9. The gas turbine component assembly as set forth in any one of the preceding claims, **characterized in that** an angle (α) between the groove depth direction and a clamping direction (K) of the clamping of the flange between the first component and the first arm of the rocker is no more than 15° or at least 45°, particularly at least 75°.

10. The gas turbine component assembly as set forth in any one of the preceding claims, **characterized in that** an angle (β) between the groove depth direction and a screw axis (S) of the set screw is no more than 15° or at least 30°, particularly at least 45°.

11. The gas turbine component assembly as set forth in any one of the preceding claims, **characterized in that** the groove (11) is arranged in a projecting flange (13) of the first component.

12. A method for connecting the first and second components (10, 20) of a gas turbine component assembly as set forth in any one of the preceding claims, **characterized in that** the articulating portion (33) of the rocker (30) is supported in the groove (11) on the first component and the set screw (40) is screwed in order to tension the arm (31) of the rocker against the flange (21).

13. A gas turbine, particularly aircraft engine, with a gas turbine component assembly as set forth in any one of claims 1 to 11.

14. The gas turbine as set forth in the preceding claim, **characterized in that** the first component is a first wall segment (10), particularly a fairing or panel, of a gas turbine channel housing, particularly of a turbine center frame between a first and a second turbine, and the second component is a second wall segment (20), particularly a panel or fairing, of the gas turbine channel housing.

## Revendications

1. Agencement de composants pour turbines à gaz, comprenant :
un premier composant, en particulier un premier segment de paroi (10) d'un boîtier de canal de turbine à gaz ;
un second composant qui lui est raccordé, en particulier un second segment de paroi (20) d'un boîtier de canal de turbine à gaz, avec une bride (21) en particulier biseautée qui chevauche en partie le premier composant ;
une bascule (30) avec une section d'articulation (33) qui est montée à rotation dans une encoche (11) sur le premier composant, qui présente en section transversale perpendiculairement à une direction longitudinale de l'encoche deux flancs d'encoche (11 A) qui sont opposés l'un à l'autre dans le sens de la largeur de l'encoche, une base d'encoche (11B) reliant ces flancs d'encoche et un bord d'encoche qui est opposé à la base d'encoche dans le sens de la profondeur de l'encoche ; et
une vis de réglage (40) ;
dans lequel la bride (21) du second composant est calée entre le premier composant (10) et un bras (31) de la bascule (30), qui est tendu contre la bride (21) par la vis de réglage (40), **caractérisé en ce que** la vis de réglage (40) s'appuie sur une surface du premier composant côté bascule, en particulier opposée à un canal de gaz défini par les composants sur le premier composant (10).

2. Agencement de composants pour turbines à gaz selon l'une quelconque des revendications précédentes, **caractérisé en ce que** la vis de réglage (40) est agencée sur un côté - opposé au bras (31) - d'un axe de rotation (D) de la section d'articulation (33) montée à rotation dans l'encoche et/ou le premier composant (10) et la bascule (30) s'écartent l'un de l'autre.

3. Agencement de composants pour turbines à gaz selon l'une quelconque des revendications précédentes, **caractérisé en ce que** la vis de réglage est fixée dans un renfoncement (12) du premier composant dans la direction longitudinale de l'encoche avec adaptation de formes.

4. Agencement de composants pour turbines à gaz selon l'une quelconque des revendications précédentes, **caractérisé en ce que** la vis de réglage est vissée sur un filet de la bascule (30) ou sur un écrou (41), qui s'appuie sur la bascule (40).

5. Agencement de composants pour turbines à gaz selon l'une quelconque des revendications précédentes, **caractérisé en ce que** la bascule (40) est fixée sur le premier composant (10) dans la direction longitudinale de l'encoche sur un ou deux côtés avec adaptation de formes.

6. Agencement de composants pour turbines à gaz selon l'une quelconque des revendications précédentes, **caractérisé en ce que** la bascule (30) présente dans la direction longitudinale de l'encoche au moins une butée (34), qui s'accroche à l'encoche (11) avec adaptation de formes.

7. Agencement de composants pour turbines à gaz selon l'une quelconque des revendications précédentes, **caractérisé en ce que** l'encoche (11) est ouverte sur un ou deux côtés dans la direction longitudinale de l'encoche.

8. Agencement de composants pour turbines à gaz selon l'une quelconque des revendications précédentes, **caractérisé en ce qu'**une section transversale de l'encoche converge vers le bord de l'encoche dans le sens de la profondeur de l'encoche.

9. Agencement de composants pour turbines à gaz selon l'une quelconque des revendications précédentes, **caractérisé en ce qu'**un angle (α) entre la direction de la profondeur de l'encoche et une direction de calage (K) permettant de caler la bride entre le premier composant et le premier bras de la bascule atteint au maximum 15° ou au moins 45°, en particulier au moins 75°.

10. Agencement de composants pour turbines à gaz selon l'une quelconque des revendications précédentes, **caractérisé en ce qu'**un angle (β) entre la direction de la profondeur de l'encoche et un axe de vissage (S) de la vis de réglage atteint au maximum 15° ou au moins 30°, en particulier au moins 45°.

11. Agencement de composants pour turbines à gaz selon l'une quelconque des revendications précédentes, **caractérisé en ce que** l'encoche (11) est agencée dans une bride saillante (13) du premier composant.

12. Procédé pour relier le premier et le second composant (10, 20) d'un agencement de composants pour turbines à gaz selon l'une quelconque des revendications précédentes, **caractérisé en ce que** la section d'articulation (33) de la bascule (30) est montée dans l'encoche (11) du premier composant et la vis de réglage (40) est vissée pour tendre le bras (31) de la bascule contre la bride (21).

13. Turbine à gaz, en particulier groupe motopropulseur avec un agencement de composants pour turbines à gaz selon l'une quelconque des revendications 1 à 11.

14. Turbine à gaz selon l'une quelconque des revendications précédentes, **caractérisée en ce que** le premier composant est un premier segment de paroi (10), en particulier un carénage ou un panneau, d'un boîtier de canal de turbine à gaz, en particulier d'un cadre central de turbine entre une première et une seconde turbine, et le second composant est un second segment de paroi (20), en particulier un carénage ou un panneau, du boîtier de canal de turbine à gaz.
